# EUROPEAN PATENT APPLICATION

(11) **EP 4 489 270 A1**
(43) Date of publication of application: **08.01.2025**
(21) Application number: 23183267.6
(22) Date of filing: 04.07.2023
(51) Int. Cl.: H02K 24/00, H02K 3/52, G01D 5/20, H01R 9/24

(54) **CIRCUITRY HOLDER OF A RESOLVER'S STATOR**

(71) Applicant: TE Connectivity Belgium B.V., 8020 Oostkamp (BE)
(72) Inventor: OCKET, Tom, B-8020 Oostkamp (BE); VERVAET, Jorgen, B-8020 Oostkamp (BE); BOUDERIE, Valentin, B-8020 Oostkamp (BE); LODEWIJK, Roeygens, B-8020 Oostkamp (BE)
(74) Representative: Grünecker Patent- und Rechtsanwälte PartG mbB

(57) **Abstract**

The document relates to a circuitry holder (100) of a resolver's stator, the circuity holder (100) for coupling coils of a resolver to an electric circuitry. The circuitry holder (100) comprises a mounting surface (110) with a first contact holder (120_2) that clamps a first contact (130_2) for connecting a first terminal of the resolver to the electric circuitry and a second contact holder (120_3) that clamps a second contact (130_3) for connecting a second terminal of the resolver to the electric circuitry; wherein a creepage distance (152) between the first contact (130_2) and the second contact (1303) is greater than or equal to 4 mm, the creepage distance (152) is the shortest distance between the first contact (130_2) and the second contact (130_3) along the mounting surface (110) of the circuitry holder (100), the creepage distance (152) for avoiding the generation of short circuits between the first contact (130_2) and the second contact (130_3) when the mounting surface (110) is contacting a corrosive fluid.

## Description

The invention relates to a circuitry holder of a resolver's stator, a method of manufacturing such a circuitry holder, and the use of a stator comprising such a circuitry holder.

A resolver is a type of rotary electrical transformer used for measuring degrees of rotation. For example, the resolver is a reluctance resolver, which may look like a small electrical motor having a stator and rotor. On the inside, the configuration of the coil wire windings makes it different. The stator portion of the resolver houses three coils: an exciter coil and two two-phase coils. Further details of the resolver are known for the person skilled in the art.

Resolvers are used in many fields of technology. In some fields, the resolvers are used in devices that come into contact with corrosive fluids. For example, in the field of motors, such as electric motors, specific cooling liquids can be used, e.g. oils, such as an automatic transmission fluid (ATF), which is a type of hydraulic fluid used in vehicles with automatic transmissions. ATFs are optimized for the special requirements of a transmission, such as valve operation, brake band friction, and the torque converter, as well as gear lubrication. Usually, an ATF consists of a base oil plus an additive package containing a wide variety of chemical compounds intended to provide the required properties of a particular ATF specification.

When ATF is used to cool the motor, the ATF gets hot. When the time and temperature is too high the oil properties can change and the oil (it should be the oil, not the coil..) can get aggressive, and thus, the ATF can attack the metal, e.g. the ATF attacks the bare contacts and bare copper wire ends of the coils, and generate sulfides, e.g. copper sulfide.

In combination with the electro-galvanic effect, conductive circuits can occur between the metal contacts. Usually, the electro-galvanic effect is of remote relevance to resolvers. For example, the exciter coil is excited with a voltage oscillating between -Ve to +Ve. Thus, the average Voltage potential Ve is 0V. The phase coil, in response, receives a voltage oscillating between -Vp and +Vp, i.e. in average a phase Voltage potential Vp of 0V. Consequently, the potential difference is zero.

However, it has been observed that the user sometimes shifts the potential of the phase coils to a range between 0 V and Vmax. Therefore, if the user receives a signal having 0V or Vmax, the user can identify a failure of the phase coil. For example, the user shifts the voltage by connecting a resistor to the contact connecting the phase coil.

This potential additional shift, however, causes that in average the potential of the phase coil Vp is (Vmax-V0)/2. In combination with corrosive oils, the oil can attack the bare Cu of the coil wire and/or the contact and generates copper sulfide. In combination with the electro-galvanic effect this copper sulfide can be deposited on the surface between the contacts, and a conductive circuits can appear between the contacts.

In more details, having different electrode potentials of the phase coil and the exciter coil, two or more contacts can come into contact in an electrolyte, one contact acts as an anode and the other as a cathode. The potential difference between the two contacts is the driving force for an accelerated attack on the anode contact, which dissolves into the electrolyte. This leads to the metal at the anode corroding more quickly than it otherwise would and corrosion at the cathode being inhibited. For example, the contacts at the phase coil tend to corrode more rapidly because they are at the high potential. This increases the probability that conductive circuits appear, which initiates growing at each contact of the phase coil.

Such conductive circuits, however, are highly problematic for resolvers. When the resistance between the resolver circuits become too low, then the resolver does not meet the accuracy anymore. In other words, a short circuit between the contacts of the phase coil is created. A short circuit is an electrical circuit that allows a current to flow along an unintended path with no or very low electrical impedance.

State of the art is that the contacts are provided with an epoxy sealant (potting) that can be applied in the contact area to protect the contacts and the contact welding zone. However, this is a high-cost process solution. In particular, resolvers with potting may not meet the market prices.

The object of the invention is to provide a solution for a resolver, which allows the costs to be reduced. A further object is to minimize the installation space. Furthermore, the performance, in particular in terms of the accuracy, of the resolver shall be improved, in particular in an oil application.

This object is solved by the independent claims. Advantageous embodiments are solved by the dependent claims.

According to a general example, a creepage distance between a first contact and a second contact is increased to be greater than or equal to 4 mm. The creepage distance is the shortest distance between the first contact and the second contact along a mounting surface of a circuitry holder. Thus, the larger creepage distance reduces the probability of the generation of short circuits between the first contact and the second contact when the mounting surface is contacting a fluid that is adapted to generate conductive path between the two contacts. Even if oil is made to avoid the generation of conductive paths, this is not always working as expected depending on temperature. So, a fluid could generate occasionally conductive paths.

More specifically, a first aspect relates to a circuitry holder of a resolver's stator. The circuit holder is used for coupling coils of a resolver to an electric circuitry. The electric circuity, e.g. a microcomputer, comprises the electronics for operating the resolver.

The circuit holder comprises a body part with a mounting surface. The mounting surface is an outside or top layer of the circuit holder. For example, the body part of the circuit holder is a molded part. In particular, the body part is made of an isolating material so that the body part can support electrically conductive parts.

A first contact holder is arranged at the mounting surface. A holder is a recess or a protrusion formed in the mounting surface. For example, the holder is formed integrally with the body part as a molded part. Thus, the body part can be fabricated economically.

The first contact holder clamps a first contact. Clamping means that the two parts, i.e. the contact and the body part, can be connected by putting them together. In particular, the connection can be reversible. Such a clamping connection is particularly economical because both parts can be individually manufactured and after manufacturing of each of the parts individually, the two parts can be connected. This avoids a cost intensive process, e.g. a process such as over molding the contact.

The first contact can be a blank electrical contact, for example comprising copper. The contact is for connecting a first terminal of the resolver to the electric circuitry. For example, a first terminal is a first end of a phase coil or a first end of an exciter coil.

Additionally, according to the first aspect, the circuit holder comprises a second contact holder that clamps a second contact for connecting a second terminal to the electric circuitry. For the description of the second contact holder and the second contact reference is made to the above description of the first contact holder and the first contact. For example, a second terminal is a second end of the phase coil.

Further, the first contact holder is abutting to the second contact holder. Abutting means here that the first contact holder is next to the second contact holder. In other words, each first contact holder can have maximal two abutting second contact holders, which are both next to the first contact holder.

As discussed above, a creepage distance between the first contact and the second contact is greater than or equal to 4 mm. Conventionally, the distance between the first contact and the second contact is reduced. This distance is usually 3 mm or less. The contact pitch gives this short distance of 3 mm. Contact pitch is defined as the distance between two abutting contacts.

For example, the distance between the first and second end of the phase coil is one example of a contact pitch. In such a situation, the contact pitch is also referred to as coil pitch. Further, the distance between the second end of the phase coil and the first end of the exciter coil is an example of a contact pitch. By increasing the contact pitch, the creepage distance avoids the generation of short circuits caused by the electrical corrosion process.

In the following, by way of example, the first contact is for connecting a first end of the phase and the second contact is for connecting a second end of the phase coil. Alternatively, not described in detail, the first contact is for connecting a second of the phase coil and the second contact is for connecting a first end of the exciter coil.

A first way to increase the creepage distance is done by increasing the contact pitch to more than the usual selected minimum. This solution is a particularly economical solution.

Preferably, the contact pitch, i.e. a clearance distance, is less than or equal to 20 mm. Such an upper limit minimizes the installation space of the resolver. The clearance distance is the shortest distance between the first contact and the second contact along an imaginary line directly connecting the first contact and the second contact. As used herein, a line is referred to by two points that lie on it, i.e. the first and second contact. Directly connecting is referred to as the connection that may be passing any material.

Preferably, the creepage distance between the first contact and the second contact is greater than or equal to 5.75 mm. Even more preferably, the creepage distance between the first contact and the second contact is greater than or equal to 6.5 mm. Additionally or alternatively, the clearance distance is preferably less than or equal to 15 mm. Even more preferably, the clearance distances are less than or equal to 10 mm.

According to a second aspect, in addition to the first aspect, the clearance distance between the first contact and the second contact can be shorter than the creepage distance. The clearance distance that is shorter than the creepage distance reduces the installation space of the resolver. Preferably, the clearance distance is less than or equal to 4 mm. Even more preferably, the clearance distance is greater than or equal to 2 mm.

In other words, the creepage distance is increased by structural modifications to the mounting surface. Such structural modifications are the subject of the third to sixth aspects. All these solutions allow a particularly simple fabrication, for example by molding the body part having the modified mounting surface.

According to a third aspect, in addition to the second aspect, the circuitry holder comprises a wall protruding from the mounting surface, the wall for increasing the creepage distance compared to the clearance distance. A wall as used herein is a structure protruding from the mounting surface. For example, the wall is arranged between the abutting first and second contact. For example, a part of the wall can be integrally formed with one of the first and second contact holder.

According to a fourth aspect, in addition to any of the second and third aspects, the circuitry holder comprises a trench formed in the mounting surface, the trench for increasing the creepage distance compared to the clearance distance. A trench as used herein is a recessed structure in the mounting surface. For example, the trench is arranged between abutting first and second contacts. For example, a part of the trench can be formed integrally with one of the first and second contact holders.

According to a fifth aspect, in addition to any of the second to fourth aspects, the clearance distance between the first contact and the second contact is less than or equal to 5 mm. Such a solution allows to reduce the installation space. In particular, the clearance distance is greater than or equal to 3 mm. As discussed above, the contact pitch is at least 3 mm, and thus, further reduction of the clearance distance is not necessary for resolvers.

According to a sixth aspect, in addition to any of the second to fifth aspects, the circuitry holder further comprises a counterpart with an inner surface, the inner surface opposing the mounting surface, wherein the counterpart comprises a separation protruding from the inner surface, the separation for increasing the creepage distance compared to the clearance distance. In other words, the circuity holder comprises the body part with the mounting surface and the counterpart, which may be seen as a cover. Such a counterpart further avoids the need for potting material. In particular, the body part and the counterpart may both comprises clamping parts, for clamping the counterpart to the body part. In this way, both parts can be fabricated economically, for example by a potting process.

According to a seventh aspect, in addition to any of the preceding aspects, the circuitry holder further comprises a first x-phase contact holder that clamps a first x-phase contact for connecting a first end of an x-phase coil to the electric circuitry and a second x-phase contact holder that clamps a second x-phase contact for connecting a second end of the x-phase coil (210) to the electric circuitry. Further the circuitry holder comprises a first exciter contact holder that clamps a first exciter contact for connecting a first end of an exciter coil to the electric circuitry and a second exciter contact holder that clamps a second exciter contact for connecting a second end of the exciter coil to the electric circuitry, wherein the creepage distance is the creppage distance between first x-phase contact and the second x-phase contact. Additionally or alternatively, the creepage distance is the distance between the second x-phase contact and the first exciter contact. Further, an exciter creepage distance between the first exciter contact and the second exciter contact is less than the creepage distance. As discussed above, the potential of the exciter contacts is likely to be in average 0V, and thus, the probability that galvanic corrosion occurs at the exciter contact is reduced. Thus, the creepage distance can be reduced between the exciter contacts, and thus, the installation space can be minimized.

According to an eighth aspect, in addition to the seventh aspect, the circuitry holder further comprises a first y-phase contact holder that clamps a first y-phase contact for connecting a first end of an y-phase coil to the electric circuitry and a second y-phase contact holder that clamps a second y-phase contact for connecting a second end of the y-phase coil to the electric circuitry; wherein the first and second exciter contacts are arranged between the first contact and the first y-phase contact. As discussed above, the potential of the exciter contacts is likely to be in average 0V, and thus, the probability that galvanic corrosion occurs at the exciter contact is reduced. Thus, the creepage distance can be reduced between the exciter contacts, and thus, the installation space can be minimized.

According to a ninth aspect, in addition to any of the preceding aspects, wherein at least one of the first and second contact is a fork contact having a slot for receiving an end of a wire of the phase coil in the slot. Preferably, all above discussed contacts have a fork contact. This is a particular simple solution for connecting the coil end wires, which further reduces the manufacturing costs. Further, the for contact encloses the bare copper of the coil end wire, which reduces the bare copper being in contact with the corrosive fluid, and thus, the probability of corrosion is further reduced. Further, the fork contact allows is an insulation-displacement contact, which cut the insulation as the wire is inserted. Thus, the fraction of bare copper is reduced.

Notably, at least one of the above discussed contacts, in particular the first and second contact, is a stamped and bent metal piece, which comprises a protecting layer thereby further reducing the bare metal, which may contribute to corrosive processes.

According to a tenth aspect, in addition to any of the preceding aspects, the circuitry holder is formed by a molding process and wherein the first and second contacts are not over molded. Advantageously, the contacts are releasably clamped. This further reduces the manufacturing costs.

An eleventh aspect relates to a stator of a resolver. The stator comprising a circuitry holder according to any of the first to tenth aspect. The stator further comprises a phase coil, wherein the first contact connects the first end of the phase coil to the electric circuitry and the second contact connects the second end of the phase coil to the electric circuitry. The phase coil may be referred to in the following as x-phase coil. Further, the stator further comprises an exciter coil, wherein a first exciter contact connects a first end of the exciter coil to the electric circuitry and a second exciter contact connects the second end of the exciter coil to the electric circuitry. Further, the stator comprises a y-phase coil, wherein a first y-phase contact connects a first end of the y-phase coil to the electric circuitry and the y-second phase contact connects the second end of the phase coil to the electric circuitry.

A twelfth aspect relates to a method for manufacturing a circuitry holder of a resolver's stator, the method comprising the steps of:
Forming the circuitry holder, the circuitry holder comprising a first and second contact holder arranged at a mounting surface of the circuitry holder;
Clamping a first and second contact of an electric circuitry to the first and second contact holder, respectively;
wherein a creepage distance between the first contact and the second contact is greater than or equal to 4 mm, the creepage distance is the shortest distance between the first contact and the second contact along the mounting surface of the circuitry holder, the creepage distance for avoiding the generation of short circuits between the first contact and the second contact when the mounting surface is contacting a corrosive fluid.

Additionally, the method may comprises the steps of forming a means for holding the electric circuitry and mounting the electric circuitry to the means for holding the electric circuitry.

Further aspects of the method may be derived based on the above description the preceding aspects.

A thirteenth aspect relates to a method of manufacturing the circuitry holder according to the twelfth aspect, wherein the method further comprises a forming a wall protruding from the mounting surface, the wall for increasing the creepage distance compared to the clearance distance and/or forming a trench in the mounting surface, the wall for increasing the creepage distance compared to the clearance distance.

A fourteenth aspect relates to the use of a stator according to any of the tenth or eleventh aspect, wherein the first and second contact are exposed to a corrosive fluid. In other words, the first and/or second contact are not protected by a housing or a potting material from the corrosive material.

A fifteenth aspect relates to the use of a stator according to any of the tenth or eleventh aspect, wherein the first and second contact are exposed to an automatic transmission fluid.

The invention will now be described in greater detail and in an exemplary manner using advantageous aspects and with reference to the drawings. The described aspects are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are for the sole purpose of illustrating the preferred and alternative examples of how the invention can be made and used, and are not to be construed as limiting the invention to the illustrated and described embodiments only. Furthermore, several aspects of the embodiments, individually or in different combinations, may form solutions according to the present invention. Thus, the embodiments described below may be considered either alone or in an arbitrary combination thereof.

The described embodiments are merely possible configurations and it must be borne in mind that the individual features as described above can be provided independently of one another or can be omitted altogether while implementing this invention. Further features and advantages will become apparent from the following more detailed description of the various embodiments of the invention, as illustrated in the accompanying drawings, in which like references refer to like elements, and wherein:
In the figures,
- **FIG. 1**: stator of a resolver according to a first example;
- **FIG. 2**: section II of Fig. 1;
- **FIG. 3**: schematic view showing difference between clearance distance and creepage distance caused by a trench;

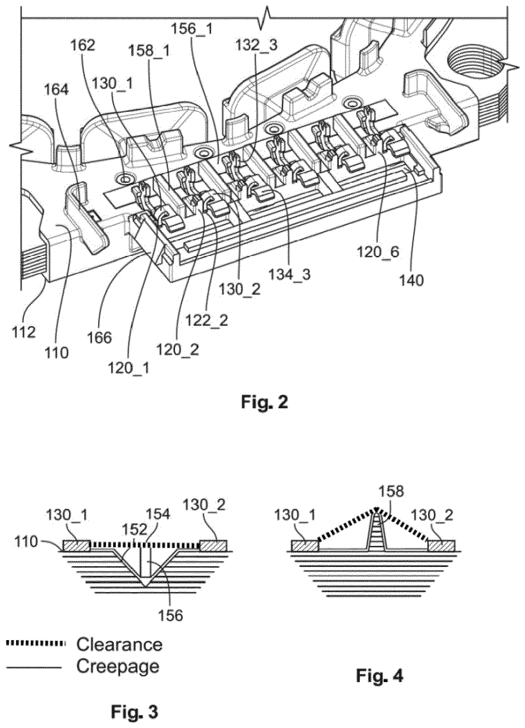

- **FIG. 3**: schematic view showing difference between clearance distance and creepage distance caused by a wall; and

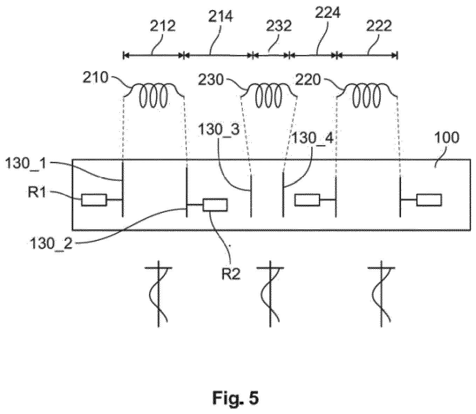

- **FIG. 5**: schmetic view of circuitry holder according to a second example.

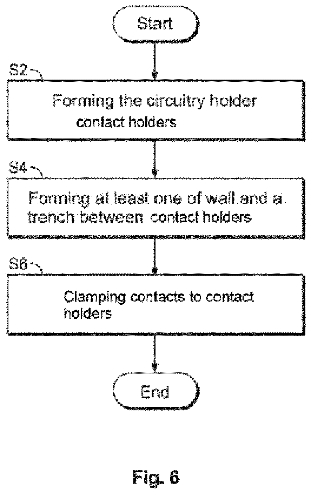

- **FIG. 6**: fow diagram for manufacturing a circuitry holder according to an example.

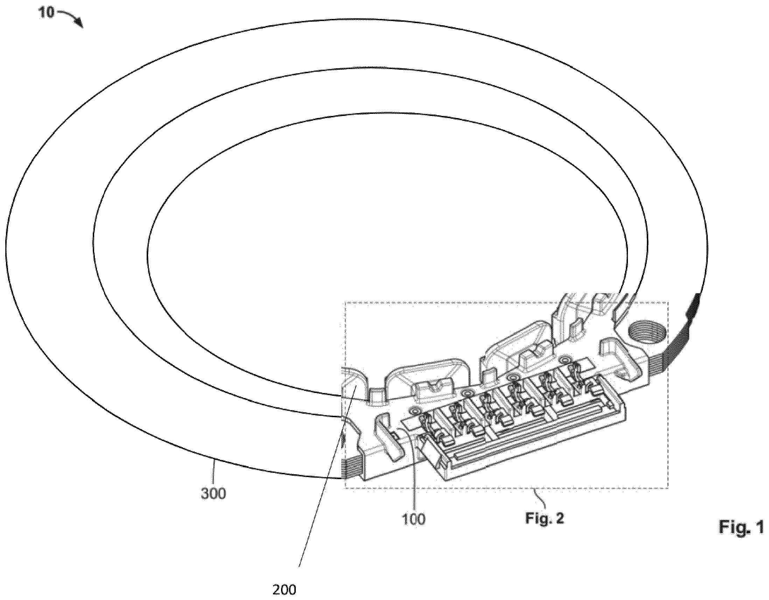

Fig. 1 shows a schematic view of stator 10 of a resolver. The stator 10 comprises a circuitry holder 100. The circuitry holder 100 comprises a body part for holding electrical connections for coupling not shown coils to a not shown electric circuitry. Further, the circuitry holder 100 according to the example comprises coil protrusions 200 for holding the not shown coils and receiving recesses are formed in the circuitry holder 100, the receiving recesses holding a laminated stack 300. The coil protrusions 200 can be formed integrally with the circuitry holder 100.

Fig. 2 shows the detail Fig. 2 of Fig. 1. The circuitry holder 100 comprises a mounting surface 110. Protruding contact holders 120_1, 120_2, ...., 120_6 protrude from the mounting surface 110. Further, a plurality of recesses, each forming a recessing contact holder, e.g. recessing contact holder 122_2, are formed in the mounting surface 110. Each of the contact holders, i.e. the protruding contact holders and the recessing contact holders, is formed substantially in a direction perpendicular to the mounting surface 110. A molding process can be used to form the circuitry holder 100 with perpendicular projecting/recessing contact holders. In particular, recesses are formed in the direction towards a circuitry surface 112, the circuitry surface 112 opposing the mounting surface 110.

Further, the circuitry holder 100 comprises a plurality of contacts, e.g. the contacts 130_1 and 130_2, ..., 130_6, i.e. six contacts. Each of the contacts has a coil end, e.g. coil end 132_3, and a circuitry end, e.g. circuitry end 134_3.

The coil end 132_3 is for receiving a wire of the coil not shown. In particular, the coil end 132_3 is a fork contact having a slot for receiving an end of a wire of the coil in the slot. Since stripping insulation from wires is time-consuming, the coil end uses fork shaped ends to rapidly assembly, namely by the fork shape that is a type of an insulation-displacement contact which cut the insulation as the wire is inserted. The slot of the fork-shaped opening in the coil end, into which the insulated wire is welded, which cut through the insulation to contact the conductor. Such a connection is particularly important in view of corrosive fluids because the fraction of bare wire to insulated copper wire for contacting the coil is reduced.

The circuitry end 134_3 extends in a through hole 140 formed in the circuitry holder 100. Thus, the circuitry end 134_3 can be contacted via the through hole 140. Notably, a not show electric circuitry is mounted at the circuitry surface 112. Such an arrangement is advantageous because a through hole 140 prevents, as explained below, the growth of electric circuits caused by corrosive fluids.

Advantageously, each contact is formed as a one piece part. In particular, each of the contacts is formed by stamping and bending a metal sheet. This a cost efficient solution to fabricate the contacts and at the same time allows to reduce the fraction of the surface of the contact exposing bare metal relative to isolated metal. Such contacts are particularly important in view of corrosive fluids because the fraction of bare metal to insulated metal of contact is reduced.

Further, the contact holders 120, 122 clamp the contacts 130. Thus, the circuitry holder 100 can connect the coil, i.e. the phase coils the exciter coil, and the electric circuitry. Clamping is a particular cost efficient production method compared to, e.g. over molding the contacts. However, by over molding the surface of the contacts exposed to a corrosive fluid can be reduce. In view of using clamping, corrosion-related effects must be considered more carefully.

In view of the presence of a corrosive fluid, this document proposes to increase the creepage distance between abutting contacts connecting the phase coils.

As show in Figs. 3 and 4, the creepage distance 152 is the shortest distance between the first contact 130_1 and the second contact 130_2 along the mounting surface 110. Further, a clearance distance 154 between the first contact 130_1 and the second contact 130_2 is the shortest distance between the first contact and the second contact along an imaginary line directly connecting the first contact 130_1 and the second contact 130_2. As shown for example in Fig. 3, a trench 156 formed in the mounting surface increases the creepage distance 152 compared to the clearance distance 154. According to the example shown in Fig. 4, a wall 158 protruding from the mounting surface 110 increases the creepage distance 152 compared to the clearance distance 154.

As shown in the example in Fig. 2, a plurality of walls, e.g. wall 158_1, are arranged between abutting contacts. Each of the walls is protruding substantially perpendicular from the mounting surface 110. A molding process can be used to form a circuitry holder 100 with perpendicular protruding walls 158 and the above discussed contact holders.

An example of a trench is the through hole 140 arranged at the circuitry end, e.g. circuitry end 134_3, of contacts and a trench 156_1 is arranged at the coil end, e.g. coil end 132_3, of the contacts. A molding process can be used to form a circuitry holder 100 with perpendicular recessing trenches and the above discussed contact holders and walls.

Notably, the creepage distance can be increase by simply spacing the contacts 130_1 and 130_2 apart from each other. In particular, the clearance distance is greater than or equal to 3 mm, which is the minimal contact pitch, which is usually used for resolvers. Thus, at the cost of a reduced installation space the effects of corrosion can be reduced.

A creepage distance between the first contact 130_1 and the second contact 130_2 that is greater than or equal to 5 mm sufficiently reduces the risk of short circuits, even in an environment with corrosive liquids, to enable long resolver life and high accuracy of the measurement results. In particular, such a creepage distance prevents short circuits from occurring between the first contact 130_1 and the second contact 130_2 when the mounting surface 110 comes into contact with a corrosive fluid.

As further shown in Fig. 2, the walls and trenches allow that the clearance distance between the first contact and the second contact is less than the creepage distance. Advantageously, the clrearance is distance is less than or equal to 5 mm.

Even if not shown in Fig. 2, the circuitry holder 100 may be covered with a not shown counterpart. The counterpart has an inner surface, the inner surface opposing the mounting surface 110, wherein the counterpart comprises a separation protruding from the inner surface, the separation for increasing the creepage distance compared to the clearance distance. For example, the separations contacts the walls or the mounting surface between the contacts.

Advantageously, the circuitry holder 100 has counterpart recess holders 162 and counterpart protrusion holders 164, which are provided at the mounting surface 110 of the circuitry holder for mounting the counterpart to the circuitry holder 10. Further, the circuitry holder 100 may comprise counterpart clipping holders 166 arranged at a side surface connecting the mounting surface 110 and the circuitry surface 112 for mounting the counterpart to the circuitry holder.

Further, as shown in Fig. 2, the circuitry holder 100 is adapted to hold a not shown x-phase coil, wherein the first x-phase contact connects 130_1 the first end of the not shown x-phase coil to the electric circuitry and the second x-phase contact 130_2 connects the second end of the not shown x-phase coil to the electric circuitry. Further, the circuitry holder 100 is adapted to hold a not shown exciter coil, wherein a first exciter contact connects a first end of the not shown exciter coil to the electric circuitry and a second exciter contact connects the second end of the not shown exciter coil to the electric circuitry. Further, the circuitry holder 100 is adapted to hold a not shown y-phase coil, wherein a first y-phase contact connects a first end of the y-phase coil to the electric circuitry and the y-second phase contact connects the second end of the phase coil to the electric circuitry.

A schematic configuration of the circuitry holder 100 with coils is shown in Fig. 5. In particular, Fig. 5 shows a schematic example of an x-phase coil 210, an y-phase coil 220, and an exciter coil 230.

As discussed above, a user may connect the first contact 130_1 to a first resistance R1 to shift the potential of the first contact 130_1 to a predefined minimal value, e.g. to a value of 0V, in case the x-phase coil 210 has a failure. For example, the first resistance R1 is connected to ground.

Further, the user may connect the second contact 130_2 to a second resistance R2 to shift the potential of the second contact 130_2 to a predefined maximal value, e.g. to a value of 5V, in case the x-phase coil 210 has a failure. For example, the second resistance R2 is connected to a potential of 5V. Thus, in case of detecting the predefined maximal or minimal value, the user immediately knows that the coil 210 has a defect.

For the same reasons, the contacts 130_5 and 130_6 of the y-phase coil 220 may be connected to similar resistances.

As discussed above, the coils 210, 220, 230 are subject to an oscillating potential. Thus, the phase contacts of the example are at an average potential of typically 2.5V and the exciter contacts are at an average potential of 0V, because the exciter contacts are not connected to the predefined resistances. Thus, the creepage distances 212, 214, 222, 224, and 232 may be optimized based on the potentials. In particular, at the high potential of 2.5V a corrosive process occurs while at 0V no corrosive process occurs.

The fact that a user may not monitor the exciter contact can be used. In particular, a stator comprises a first exciter contact 130_3 for connecting a first end of an exciter coil 230 to the electric circuitry and a second exciter contact holder that clamps a second exciter contact 130_4 for connecting a second end of the exciter coil 230 to the electric circuitry. The exciter creepage distance 232 between the first exciter contact 130_3 and the second exciter contact 130_4 can be less than the phase creepage distance 212 between the first contact 130_1 and second contact 130_2. Thus, the installation space may be reduced.

Further, in view of the fact that a user may additionally monitor the y-phase coil 220, the first exciter contact 130_ 3 and the second exciter contact 130_4 can be arranged between the first contact 130_1 and the first y-phase contact. This enables to reduce the intermediate creepage distances 214 and 224. In particular, the intermediate creepage distance may be less than the phase creepage distances 212, 222. Thus, the installation space may be reduced.

Fig. 6 shows a flow diagram of manufacturing a circuitry holder of a resolver's stator.

The method comprising step S2 of forming the circuitry holder, the circuitry holder comprising a first and second contact holder arranged at a mounting surface of the circuitry holder. In particular, the circuitry holder may be formed by a molding process.

Further, the method may comprise the step S4 of forming a wall protruding from the mounting surface, the wall for increasing the creepage distance compared to a clearance distance, and/or forming a trench in the mounting surface, the trench for increasing the creepage distance compared to a clearance distance. In particular, the circuitry holder with the wall or the trench may be formed in one molding process.

Further, the method comprises the step S6 of clamping a first and second contact of an electric circuitry to the first and second contact holder, respectively. A creepage distance between the first contact and the second contact is selected to be greater than or equal to 5 mm, the creepage distance is the shortest distance between the first contact and the second contact along the mounting surface of the circuitry holder, the creepage distance for avoiding the generation of short circuits between the first contact and the second contact when the mounting surface is contacting a corrosive fluid.

A stator according to any of the above discussed examples can be used in a corrosive fluid, in particular wherein the first and second contact are exposed to a corrosive fluid. In particular, the first and second contact may be exposed to an automatic transmission fluid.

### REFERENCE NUMERALS

| **Reference Numeral** | **Description** |
|---|---|
| 10 | Stator |
| 100 | circuitry holder |
| 110 | mounting surface |
| 112 | circuitry surface |
| 120, 120 1, 120 2, 120 6 | protruding contact holders |
| 122, 122 2 | recessing contact holder |
| 130 1, 130 2 | Contacts |
| 132 3 | coil end |
| 134 3 | circuitry end |
| 140 | Through hole |
| 152, 232 | creepage distance |
| 154 | clearance distance |
| 156 | Trench |
| 158, 158 | Wall |
| 162 | counterpart recess holder |
| 164 | counterpart protrusion holder |
| 166 | counterpart clipping holder |
| 200 | coil protrusion |
| 210 | x-phase coil |
| 212 | x-phase creepage distance |
| 214, 224 | intermediate creepage distance |
| 220 | y-phase coil |
| 222 | y-phase creepage distance |
| 230 | exciter coil |
| 232 | exciter creepage distance |
| 300 | laminated stack |

## Claims

1. Circuitry holder (100) of a resolver's stator, the circuity holder (100) for coupling coils of a resolver to an electric circuitry, the circuitry holder (100) comprises:
a mounting surface (110) with a first contact holder (120_2) that clamps a first contact (130_2) for connecting a first terminal of the resolver to the electric circuitry and a second contact holder (120_3) that clamps a second contact (130_3) for connecting a second terminal of the resolver to the electric circuitry, the first contact holder (120_2) abutting to the second contact holder (120_3);
wherein a creepage distance (152) between the first contact (130_2) and the second contact (130_3) is greater than or equal to 4 mm, the creepage distance (152) is the shortest distance between the first contact (130_2) and the second contact (130_3) along the mounting surface (110) of the circuitry holder (100), the creepage distance (152) for avoiding the generation of short circuits between the first contact (130_2) and the second contact (130_3) when the mounting surface (110) is contacting a fluid that could generate conductive path between the two contacts.

2. Circuitry holder (100) according to claim 1, wherein a clearance distance (154) between the first contact (130_2) and the second contact (130_3) is shorter than the creepage distance (152), the clearance distance (154) is the shortest distance between the first contact (130_2) and the second contact (130_3) along an imaginary line directly connecting the first contact (130_2) and the second contact (130_3).

3. Circuitry holder (100) according to claim 2, further comprising a wall (158) protruding from the mounting surface (110), the wall (158) for increasing the creepage distance (152) compared to the clearance distance (154).

4. Circuitry holder (100) according to any of claims 2 to 3, further comprising a trench (156) formed in the mounting surface (110), the trench (156) for increasing the creepage distance (152) compared to the clearance distance (154).

5. Circuitry holder (100) according to any of the preceding claims, wherein the clearance distance (154) between the first contact (130_2) and the second contact (130_3) is less than or equal to 5 mm, optionally wherein the clearance distance (154) is greater than or equal to 3 mm.

6. Circuitry holder (100) according to any of the preceding claims, further comprising a counterpart with an inner surface, the inner surface opposing the mounting surface (110), wherein the counterpart comprises a separation protruding from the inner surface, the separation for increasing the creepage distance (152) compared to the clearance distance (154).

7. Circuitry holder (100) according to any of the preceding claims, comprising
a first x-phase contact holder (120_1) that clamps a first x-phase contact (130_1) for connecting a first end of an x-phase coil (210) to the electric circuitry and a second x-phase contact holder (120_2) that clamps a second x-phase contact (130_2) for connecting a second end of the x-phase coil (210) to the electric circuitry;
a first exciter contact holder (120_3) that clamps a first exciter contact (130_3) for connecting a first end of an exciter coil (230) to the electric circuitry and a second exciter contact holder (120_4) that clamps a second exciter contact (130_4) for connecting a second end of the exciter coil (230) to the electric circuitry;
wherein the creepage distance (152) is at least one of the creepage distance between first x-phase contact (130_1) and the second x-phase contact (130_2) and the creepage distance between the second x-phase contact (130_2) and the first exciter contact (130_3);
wherein an exciter creepage distance (232) between the first exciter contact (130_3) and the second exciter contact (130_4) is less than the creepage distance (152).

8. Circuitry holder (100) according to claim 7, further comprising
a first y-phase contact holder that clamps a first y-phase contact for connecting a first end of an y-phase coil (220) to the electric circuitry and a second y-phase contact holder that clamps a second y-phase contact for connecting a second end of the y-phase coil (220) to the electric circuitry;
wherein the first and second exciter contacts (130_3, 130_4) are arranged between the first x-phase contact (130_1) and the first y-phase contact.

9. Circuitry holder (100) according to any of the preceding claims, wherein at least one of the first and second contact (130_1, 130_2) is a fork contact having a slot for receiving an end of a wire of the phase coil in the slot.

10. Circuitry holder (100) according to any of the preceding claims, wherein the circuitry holder (100) is formed by a molding process and wherein the first and second contacts (130_1, 130_2) are not over molded, optionally wherein the contacts (130_1, 130_2)are releasable clamped.

11. Stator of a resolver comprising:
a circuitry holder (100) according to any of claims 1 to 10;
a phase coil (210), wherein the first x-phase contact (130_1) connects the first end of the phase coil to the electric circuitry and the second x-phase contact (130_2) connects the second end of the phase coil (210) to the electric circuitry;
an exciter coil (230), wherein a first exciter contact (130_3) connects a first end of the exciter coil to the electric circuitry and a second exciter contact (130_4) connects the second end of the exciter coil (230) to the electric circuitry; and.
a y-phase coil (220), wherein a first y-phase contact connects a first end of the y-phase coil (220) to the electric circuitry and the y-second phase contact connects the second end of the y-phase coil (220) to the electric circuitry.

12. Method for manufacturing a circuitry holder of a resolver's stator, the method comprising the steps of:
Forming the circuitry holder, the circuitry holder comprising a first and second contact holder arranged at a mounting surface of the circuitry holder;
Clamping a first and second contact of an electric circuitry to the first and second contact holder, respectively;
wherein a creepage distance between the first contact and the second contact is greater than or equal to 5 mm, the creepage distance is the shortest distance between the first contact and the second contact along the mounting surface of the circuitry holder, the creepage distance for avoiding the generation of short circuits between the first contact and the second contact when the mounting surface is contacting a corrosive fluid.

13. Method for manufacturing the circuitry holder according to claim 12, wherein the circuit holder further comprises a wall protruding from the mounting surface, the wall for increasing the creepage distance compared to the clearance distance and/or a trench formed in the mounting surface, the trench for increasing the creepage distance compared to the clearance distance.

14. Using a stator according to claim 10, wherein the first and second contact are exposed to a corrosive fluid.

15. Using a stator according to claim 10, wherein the first and second contact are exposed to an automatic transmission fluid.
